# FASCICULE DE BREVET EUROPEEN

(11) **EP 2 223 264 B1**
(45) Date de publication et mention de la délivrance du brevet: **18.01.2012**
(21) Numéro de dépôt: 08851363.5
(22) Date de dépôt: 12.11.2008
(51) Int. Cl.: G06K 9/00

(54) **PROCÉDÉ D'IDENTIFICATION D'UNE PERSONNE PAR SON IRIS**
VERFAHREN ZUM IDENTIFIZIEREN EINER PERSON DURCH SEINE IRIS
METHOD OF IDENTIFYING A PERSON BY HIS IRIS

(30) Priorité: 22.11.2007 FR 0708186
(43) Date de publication de la demande: 01.09.2010
(73) Titulaire: MORPHO, 75015 Paris (FR)
(72) Inventeur: COTTARD, Martin, F-75015 Paris (FR)
(74) Mandataire: Maillet, Alain
(86) Numéro de dépôt international: PCT/EP2008/065410
(87) Numéro de publication internationale: WO 2009/065760

(56) Documents cités:
- EP-A- 1 600 898
- US-A1- 2007 211 924
- JOSÉ LUIS GIL RODRÍGUEZ ET AL: "A New Method for Iris Pupil Contour Delimitation and Its Application in Iris Texture Parameter Estimation" PROGRESS IN PATTERN RECOGNITION, IMAGE ANALYSIS AND APPLICATIONS LECTURE NOTES IN COMPUTER SCIENCE;;LNCS, SPRINGER-VERLAG, BE, vol. 3773, 1 janvier 2005 (2005-01-01), pages 631-641, XP019023615 ISBN: 978-3-540-29850-2

## Description

La présente invention concerne un procédé d'identification d'une personne, ainsi qu'un dispositif d'identification mettant en oeuvre un tel procédé d'identification. Elle trouve application dans le domaine de la reconnaissance biométrique et en particulier dans le domaine de l'identification par analyse des iris des yeux.

L'identification par reconnaissance biométrique est utilisée pour sécuriser des installations comme par exemple des bâtiments ou des machines ou pour obtenir la délivrance de droits, comme par exemple la délivrance d'une carte d'identité, le versement d'une pension.... Cette technologie permet de s'affranchir de codes d'accès ou de cartes qui peuvent être volés ou falsifiés. L'utilisation de cette technologie permet de renforcer la sécurité dans la mesure où la probabilité que deux personnes aient deux biométries identiques est quasiment nulle.

Un oeil comprend du centre vers la périphérie, la pupille, l'iris et la sclérotique.

L'identification par reconnaissance biométrique est plus particulièrement basée sur l'analyse de l'iris.

Le document EP-A-0 664 037 divulgue un procédé d'identification d'une personne par son iris qui comprend les étapes:
- de capture d'une image d'un oeil à identifier,
- de détermination d'une limite intérieure entre la pupille et l'iris à partir de ladite image,
- de détermination d'une limite extérieure entre l'iris et la sclérotique à partir de ladite image,
- de définition d'au moins une bande d'analyse entre la limite intérieure et la limite extérieure, la largeur radiale d'une bande étant définie comme une fraction fixe de la largeur radiale de l'iris,
- d'analyse de chaque bande d'analyse,
- de génération d'un code présent associé à chaque analyse,
- de comparaison du code présent avec un code de référence,
- de mesure de la ressemblance entre le code présent et le code de référence, et
- de prise de décision concernant l'identité de la personne à partir du résultat de la mesure.

Le procédé d'identification est mis en oeuvre à travers l'établissement d'un système de coordonnées polaires.

Un tel procédé d'identification présente le désavantage de nécessité de déterminer la limite entre l'iris et la sclérotique. Or cette limite est très difficile à déterminer pour diverses raisons, comme par exemple le flou de la zone frontière.

En outre, un tel procédé d'identification nécessite des temps de calcul très longs pour permettre une bonne détermination de la limite entre l'iris et la sclérotique et pour déterminer les différentes bandes d'analyse. Ces temps de calcul s'écoulent pour chaque tentative d'identification que l'iris à identifier soit inclus dans la base de données ou non.

Par exemple, dans le document intitulé "RECOGNIZING PERSONS BY THEIR IRIS PATTERNS" écrit par John Daugman, il est précisé que le procédé d'identification mis en oeuvre se répartit selon la schéma temporelle suivante:
Localisation de l'oeil et de l'iris: 408 millisecondes,
Ajustement de la frontière de la pupille: 76 millisecondes,
Détection et ajustement des paupières: 93 millisecondes,
Démodulation et création du code: 102 millisecondes,
Comparaison de deux codes: 10 microsecondes.

Ce schéma montre bien que la localisation de l'oeil et de l'iris et l'ajustement de la frontière de la pupille sont des étapes longues qui doivent être réduites pour permettre de réduire le temps nécessaire à une identification.

Un objet de la présente invention est de proposer un procédé d'identification qui ne présente pas les inconvénients de l'art antérieur, et qui, en particulier, permet de limiter les temps de calcul lorsque l'iris à identifier est clairement non inclus dans les bases de données.

A cet effet, est proposé un procédé d'identification d'une personne par son iris, le procédé d'identification comprenant les étapes:
- de capture d'une image d'un oeil à identifier,
- de détermination de la limite intérieure de l'iris à partir de ladite image,
- de mise en place d'une limite extérieure prédéfinie sur ladite image,
- d'analyse, pour ladite limite extérieure, de la zone de l'image comprise entre la limite intérieure et ladite limite extérieure,
- de génération d'un code actuel associé à ladite analyse,
- de comparaison du code actuel avec un code de référence généré précédemment,
- de mesure de la ressemblance entre le code actuel et le code de référence à partir de la comparaison, et
- de prise de décision concernant l'identité de la personne à partir du résultat de la mesure, et
- de bouclage sur l'étape de mise en place, avec une autre limite extérieure prédéfinie, tant qu'il existe des limites extérieures prédéfinies différentes ou tant que l'étape de prise de décision n'est pas positive.

Avantageusement, la limite extérieure est prédéfinie à partir d'éléments extérieurs à l'image capturée.

Avantageusement, chaque limite extérieure est une courbe fermée.

Avantageusement, lorsqu'il y a plusieurs courbes fermées, elles définissent des surfaces incluses les unes dans les autres.

Avantageusement, chaque limite extérieure est prédéfinie au moment de l'enregistrement du code de référence.

Avantageusement, chaque comparaison positive d'un élément distinctif du code de référence avec le code actuel incrémente un score d'une première valeur, et en ce que chaque comparaison négative d'un élément distinctif du code de référence avec le code actuel décrémente le score d'une deuxième valeur.

Avantageusement, la première valeur est égale ou supérieure à la deuxième valeur.

L'invention propose également un dispositif d'identification d'une personne par son iris, le dispositif d'identification comprenant:
- des moyens de capture d'une image de l'oeil à identifier,
- des moyens de détermination d'une limite intérieure de l'iris à partir de ladite image,
- des moyens de mise en place d'une limite extérieure prédéfinie sur ladite image,
- des moyens d'analyse, qui, pour la limite extérieure, sont prévus pour analyser la zone de l'image comprise entre la limite intérieure et ladite limite extérieure,
- des moyens de génération d'un code actuel associé à ladite analyse,
- des moyens de comparaison du code actuel avec un code de référence généré précédemment et stocké dans une base de données,
- des moyens de mesure de la ressemblance entre le code actuel et le code de référence à partir de la comparaison,
- des moyens de prise de décision concernant l'identité de la personne à partir du résultat de la mesure, et des moyens de bouclage qui sont prévus pour choisir une autre limite extérieure prédéfinie, tant qu'il existe des limites extérieures prédéfinies différentes ou tant que les moyens de prise de décision n'ont pas délivrés une décision positive.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente un algorithme d'un procédé d'identification selon l'invention,
la Fig. 2 représente un dispositif d'identification selon l'invention,
la Fig. 3 montre l'image d'un iris capturée par le dispositif d'identification selon l'invention, et
la Fig. 4a et la Fig. 4b montrent des exemples de zones d'analyse dans le cadre du procédé d'identification selon l'invention.

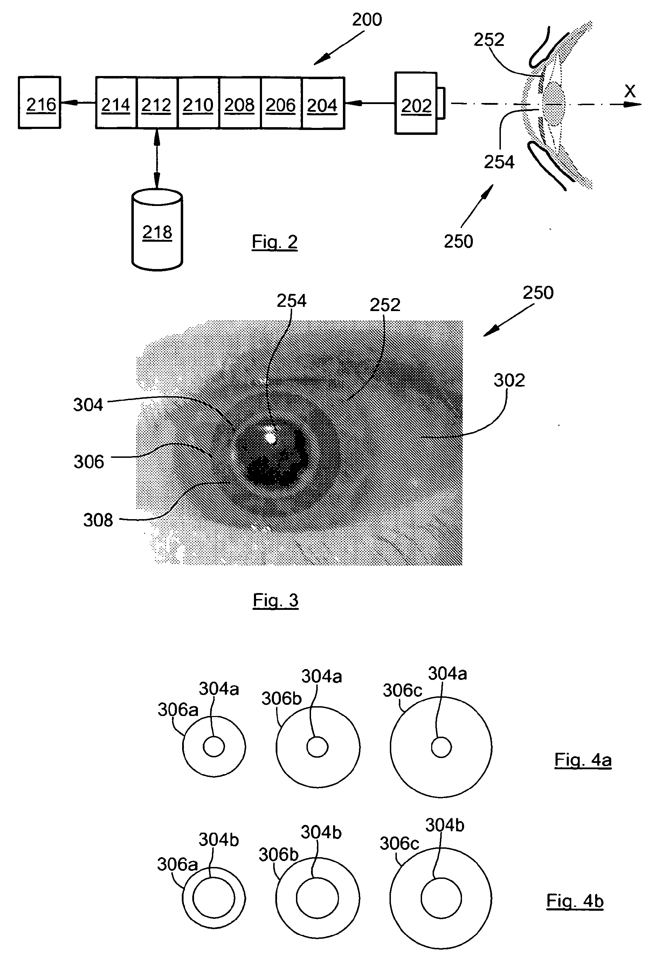

La Fig. 2 montre un dispositif d'identification 200 selon l'invention qui est disposé en vis-à-vis d'un oeil 250 à identifier.

L'oeil 250 comprend une pupille 254 et un iris 252 entouré d'une sclérotique.

La Fig. 3 représente une image de l'oeil à identifier 250 capturée par le dispositif d'identification 200.

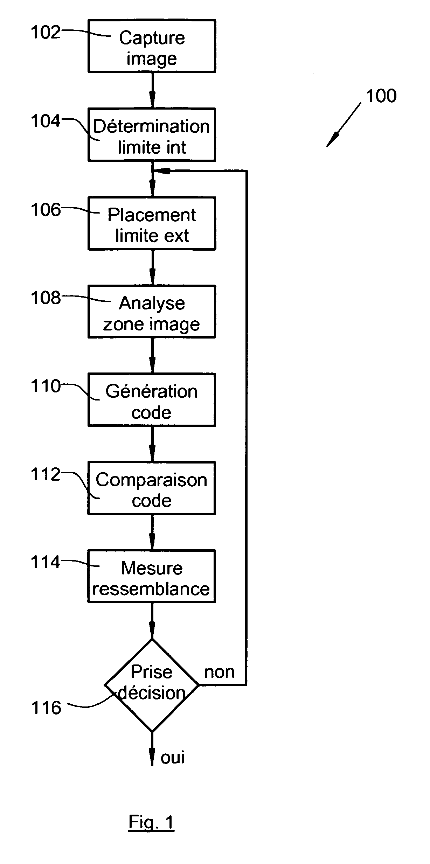

La Fig. 1 représente un procédé d'identification 100 d'une personne par son iris 252 qui comprend:
- une étape de capture 102 d'une image de l'oeil 250 à identifier,
- une étape de détermination 104 de la limite intérieure 304 de l'iris 252 à partir de ladite image,
- une étape de mise en place 106 d'une limite extérieure prédéfinie 306 sur ladite image,
- une étape d'analyse 108, pour ladite limite extérieure 306, de la zone 308 de l'image comprise entre la limite intérieure 304 et ladite limite extérieure 306,
- une étape de génération 110 d'un code actuel associé à ladite analyse,
- une étape de comparaison 112 du code actuel avec un code de référence généré précédemment,
- une étape de mesure 114 de la ressemblance entre le code actuel et le code de référence à partir de la comparaison,
- une étape de prise de décision 116 concernant l'identité de la personne à partir du résultat de la mesure, et
- de bouclage sur l'étape de mise en place 106, avec une autre limite extérieure prédéfinie 306, tant qu'il existe des limites extérieures prédéfinies 306 différentes ou tant que l'étape de prise de décision 116 n'est pas positive.

Le dispositif d'identification 200 comprend:
- des moyens de capture 202 de l'image de l'oeil 250 à identifier,
- des moyens de détermination 204 de la limite intérieure 304 de l'iris 252 à partir de ladite image,
- des moyens de mise en place 206 de chaque limite extérieure prédéfinie 306 sur ladite image,
- des moyens d'analyse 208, qui, pour chaque limite extérieure 306, sont prévus pour analyser la zone 308 de l'image comprise entre la limite intérieure 304 et ladite limite extérieure 306,
- des moyens de génération 210 du code actuel associé à chaque analyse,
- des moyens de comparaison 212 du code actuel avec un code de référence généré précédemment et stocké dans une base de données 218,
- des moyens de mesure 214 de la ressemblance entre le code actuel et le code de référence à partir de la comparaison, et
- des moyens de prise de décision 216 concernant l'identité de la personne à partir du résultat de la mesure, et des moyens de bouclage non indiqués.

La limite extérieure prédéfinie 306 n'est pas relative à la limite entre l'iris 252 et la sclérotique. Le temps de calcul de la limite extérieure entre l'iris 252 et la sclérotique n'existe donc pas contrairement au procédé d'identification de l'état de la technique. De la même manière les bandes d'analyse, telles qu'elles ont été définies dans le procédé d'identification de l'état de la technique n'existent pas dans le procédé selon l'invention. La mise en oeuvre d'un tel procédé permet de réduire d'environ 50% le temps qui, dans l'état de la technique, est nécessaire à la localisation de l'oeil et de l'iris et à l'ajustement de la frontière de la pupille.

La limite extérieure prédéfinie 306 est prédéfinie à partir d'éléments extérieurs à l'image capturée. L'absence de la détermination de la frontière entre l'iris 252 et la sclérotique évite les problèmes d'incertitude liés à cette détermination et le temps de calcul nécessaire à sa détermination. La prédéfinition peut être un ensemble d'une ou plusieurs courbes fermées (cercles, ellipses, ou autres). Cet ensemble est choisi et appliqué quelque soit le résultat de l'étape de détermination 104 de la limite intérieure 304. L'ensemble peut être constitué des courbes qui ont été appliquées lors de l'enregistrement du code de référence des différentes personnes dans la base de données 218.

L'étape de capture 102 est mise en oeuvre par les moyens de capture 202 qui peuvent être par exemple du type capteur CCD.

L'étape de détermination 104 mise en oeuvre par les moyens de détermination 204 peut être basée sur le fait que la brillance de la pupille 254 et la brillance de l'iris 252 sont fortement différentes. La détermination de la limite intérieure est alors basée sur la courbe de changement brutal de la brillance sur l'image.

Dans le cadre de l'invention telle qu'elle est représentée sur les Figs., chaque limite extérieure 306 et chaque limite intérieure 304 prennent la forme de cercle, mais d'une manière générale toute courbe fermée peut être utilisée. Les courbes fermées définissent des surfaces incluses les unes dans les autres.

Chaque limite extérieure 306 peut être une courbe fermée d'une forme prédéfinie, par exemple un cercle de rayon donné et de centre le centre de la limite inférieure 304 si celui-ci est déterminé, ou une ellipse pour éviter que la limite extérieure 306 ne recouvre trop les paupières de l'oeil 250 qui sont sources d'incertitudes.

Dans le cas de plusieurs limites extérieures 306, chacune est différente, par exemple dans le cas de cercles, chaque cercle a un rayon différent.

Par exemple, pour chaque limite extérieure 306, son rayon 'R' peut être de la forme "R= K x Rₚᵤₚᵢₗₗₑ", où K appartient à une liste prédéfinie de facteur.

Par exemple, pour chaque limite extérieure 306, son rayon 'R' peut être de la forme "R= R₀ + Rₚᵤₚᵢₗₗₑ", où Ro appartient à une liste prédéfinie.

Par exemple, pour chaque limite extérieure 306, son rayon 'R' peut être de la forme "R= F(Rₚᵤₚᵢₗₗₑ)", où F appartient à un ensemble prédéfini de plusieurs fonctions.

La Fig. 4a représente, pour un oeil dont le code est stocké dans la base de données 218, une limite intérieure 304a et trois limites extérieures 306a, 306b et 306c. La limite intérieure 304a correspond à une ouverture spécifique de la pupille 254. A partir de chaque couple constitué de la limite intérieure 304a et d'une limite extérieure 306a, 306b, 306c, la zone comprise entre la limite intérieure 304a et la limite extérieure 306a, 306b, 306c correspondante est analysée et codée par les moyens d'analyse 208 et les moyens de génération 210 conformément aux analyses et codages mis en oeuvre dans les procédés d'identification de l'état de la technique, comme par exemple le procédé décrit dans le document EP-A-0 664 0037. Chaque code ainsi généré à partir de chaque couple (304a, 306a), (304a, 306b), (304a, 306c) est stocké dans la base de données 218.

La Fig. 4b représente, pour l'oeil 250 à identifier, une limite intérieure 304b et les trois limites extérieures 306a, 306b et 306c. Les limites extérieures 306a, 306b, 306c, sont prédéfinies en ce sens que ce sont les mêmes que celles utilisées lors de l'enregistrement des codes de référence dans la base de données 218.

Lors de l'identification de l'individu, celui-ci positionne son oeil 250 devant les moyens de capture 202 qui déclenchent la capture d'une image.

La limite intérieure 304b est déterminée sur l'image (étape 104).

Une première limite extérieure prédéfinie 306a, 306b, 306c est appliquée à l'image (étape 106).

La zone comprise entre la limite intérieure 304a et la limite extérieure appliquée 306a, 306b, 306c est analysée (étape 108) et codée sous la forme d'un code actuel (étape 110).

Le code est ensuite comparé avec chacun des codes de la base de données 218 (étape 112).

La mesure de la ressemblance est ensuite réalisée (étape 114) et la prise de décision quant à l'identification de la personne (étape 116) se base sur cette mesure.

Le procédé 100 boucle ensuite sur l'étape de mise en place 106. Ce bouclage s'effectue tant qu'il existe une limite extérieure 306a, 306b, 306c différente de celles déjà mises en place qui n'a pas été mise en place ou tant que l'étape de prise de décision 116 n'est pas positive, c'est-à-dire tant que la personne n'a pas été identifiée.

Entre les Figs. 4a et 4b, la pupille s'est dilatée entre l'enregistrement (Fig. 4a) et l'identification (Fig. 4b).

Lors de la comparaison, le code de la zone entre la limite intérieure 304b dilatée et chaque limite extérieure 306a, 306b, 306c est successivement comparé aux codes de la base de données 218, et en particulier, aux codes issus des trois images de la Fig. 4a.

Pour chaque comparaison, une mesure de la ressemblance est effectuée. Si l'une de ces mesures est supérieure à un seuil d'acceptation, l'individu est considéré comme reconnu et le procédé d'identification 100 s'arrête. Si aucune de ces mesures n'est supérieure au seuil d'acceptation, l'individu est considéré comme non reconnu et le code suivant est comparé.

Bien que la base de données nécessaire à la mise en oeuvre du procédé d'identification selon l'invention est plus grande que la base de données utilisée dans le cas du procédé d'identification de l'état de la technique, la durée totale du procédé d'identification selon l'invention reste inférieure à la durée totale du procédé de l'état de la technique car la durée nécessaire à une comparaison est très inférieure à la durée qui est gagnée au cours des étapes précédentes. De plus, La taille de la base et le temps de comparaison n'ont pas d'importance si on souhaite vérifier l'identité d'une personne qui se présente nommément.

En l'espèce, sur les Figs., le ratio de rayon entre:
- la limite intérieure 304a et la limite extérieure 306a est de 2,
- la limite intérieure 304a et la limite extérieure 306b est de 3,
- la limite intérieure 304a et la limite extérieure 306c est de 4,
- la limite intérieure 304b et la limite extérieure 306a est de 1,
- la limite intérieure 304b et la limite extérieure 306b est de 2, et
- la limite intérieure 304b et la limite extérieure 306c est de 3.

Du fait de ces ratios, le code de la zone entre la limite intérieure 304b dilatée et la limite extérieure 306a est différent de chacun des codes générés à partir des exemples de la Fig. 4a.

Le code de la zone entre la limite intérieure 304b dilatée et la limite extérieure 306b se rapproche du code de la zone entre la limite intérieure 304a non dilatée et la limite extérieure 306a du fait qu'ils ont le même ratio, c'est-à-dire en d'autres termes qu'ils contiennent la même portion d'iris, cette portion étant plus ou moins comprimée. La mesure de ressemblance entre les deux codes est alors au-dessus du seuil et l'individu est considéré comme identifié.

En prenant une pluralité de limites extérieures, on augmente les chances d'avoir au moins une des configurations avec un ratio voisin de ceux des codes de la base de données 218. Le nombre de limites extérieures n'est pas limité à trois comme dans l'exemple.

Les moyens de mise en place 206 qui réalisent l'étape de mise en place 106, positionnent ainsi successivement une des limites extérieures 306a, 306b, 306c sur l'image capturée.

En outre, le procédé d'identification 100 de l'invention permet, pour chaque couple d'une limite intérieure et d'une limite extérieure, de coder l'ensemble de la zone 308 comprise entre la limite intérieure et la limite extérieure considérées. L'iris 252 est alors codé in chaque fois entre la limite intérieure et la limite extérieure considérées.

Contrairement au procédé d'identification de l'état de la technique qui procède par découpage en couronne de la zone à analyser et qui analyse uniquement chacune des couronnes. L'iris est alors codé par morceaux, c'est-à-dire entre la limite intérieure et la limite extérieure de chaque couronne. Chaque zone à analyser est donc une partie de la zone totale de l'iris à identifier.

Bien sur, dans le cas de l'invention, chaque zone 308 comprise entre la limite intérieure et la limite extérieure considérées peut être divisée en une pluralité d'anneaux aux fins d'analyse, mais l'analyse globale de ladite pluralité d'anneaux porte toujours sur la zone entre la limite intérieure et la limite extérieure considérées.

Les limites extérieures ne sont plus limitées à la frontière entre l'iris et la sclérotique, mais peuvent être extérieures à cette frontière. Il est alors possible de trouver des éléments extérieurs à cette frontière (par exemple dans la sclérotique) qui se retrouvent à la fois dans les codes de la base de données et dans les codes actuels, participant ainsi à la comparaison 112 et à la mesure de la ressemblance 114. Contrairement au procédé d'identification de l'état de la technique, dans lequel seuls les éléments qui sont à l'intérieur de la limite extérieure sont pris en compte au risque d'en omettre au voisinage de la frontière.

La mesure de la ressemblance peut être le calcul d'un score.

Lors de la comparaison d'un code actuel et d'un code de référence, chaque élément distinctif (ligne, tache, etc.) du code de référence qui est identifié dans le code actuel donne une comparaison positive et chaque élément distinctif du code de référence qui n'est pas identifié dans le code actuel donne une comparaison négative.

Le score est incrémenté d'une première valeur lorsque la comparaison est positive et décrémenté d'une deuxième valeur lorsque la comparaison est négative.

La première valeur peut être égale à la deuxième valeur ou supérieure à la deuxième valeur si une comparaison positive est considérée comme plus pertinente qu'une comparaison négative.

Lorsque le score est supérieur à une valeur d'acceptation donnée, l'identification de la personne est acceptée au cours de l'étape de prise de décision 116 qui renvoie une prise de décision positive, si le score est inférieur, l'identification est rejetée et l'étape de prise de décision 116 renvoie une prise de décision négative et les moyens de mise en place 206 positionnent alors une autre limite extérieure 306a, 306b, 306c sur l'image capturée tant qu'il existe des limites extérieures prédéfinies 306a, 306b, 306c différentes ou tant que l'étape de prise de décision 116 n'est pas positive.

Dans un autre mode de réalisation, il est possible de prévoir que la limite extérieure prédéfinie 306 soit prédéfinie de manière à ce qu'elle se trouve largement à l'intérieur de la limite extérieure entre l'iris et la sclérotique. Ainsi, la surface de l'iris 252 qui est analysée et codée est inférieure à la surface de l'iris qui est codée dans le procédé d'identification de l'état de la technique. Le code ainsi obtenu est alors plus court et le temps nécessaire à l'exécution de l'étape de comparaison est réduit d'autant, permettant un gain supplémentaire.

Bien entendu, la présente invention n'est pas limitée aux exemples et modes de réalisation décrits et représentés, mais elle est susceptible de nombreuses variantes accessibles à l'homme de l'art.

Par exemple, il est prévu que le procédé d'identification 100 s'arrête dès que l'étape de prise de décision 116 est positive, mais il est également possible de poursuivre le procédé d'identification 100 pour vérifier que la personne n'est pas enregistrée plusieurs fois dans la base de données sous des noms différents.

## Revendications

1. Procédé d'identification (100) d'une personne par son iris (252), le procédé d'identification (100) comprenant les étapes:
- de capture (102) d'une image d'un oeil (250) à identifier,
- de détermination (104) de la limite intérieure (304) de l'iris (252) à partir de ladite image,
- de mise en place (106) d'une limite extérieure prédéfinie (306) sur ladite image,
- d'analyse (108), pour ladite limite extérieure (306), de la zone (308) de l'image comprise entre la limite intérieure (304) et ladite limite extérieure (306),
- de génération (110) d'un code actuel associé à ladite analyse,
- de comparaison (112) du code actuel avec un code de référence généré précédemment,
- de mesure (114) de la ressemblance entre le code actuel et le code de référence à partir de la comparaison,
- de prise de décision (116) concernant l'identité de la personne à partir du résultat de la mesure, et
- de bouclage sur l'étape de mise en place (106), avec une autre limite extérieure prédéfinie (306), tant qu'il existe des limites extérieures prédéfinies (306) différentes ou tant que l'étape de prise de décision (116) n'est pas positive.

2. Procédé d'identification (100) selon la revendication 1, **caractérisé en ce que** la limite extérieure (306) est prédéfinie à partir d'éléments extérieurs à l'image capturée.

3. Procédé d'identification (100) selon l'une des revendications 1 ou 2, **caractérisé en ce que** chaque limite extérieure (306) est une courbe fermée.

4. Procédé d'identification (100) selon la revendication 3, **caractérisé en ce que** lorsqu'il y a plusieurs courbes fermées (306), elles définissent des surfaces incluses les unes dans les autres.

5. Procédé d'identification (100) selon l'une des revendications précédentes, **caractérisé en ce que** chaque limite extérieure est prédéfinie au moment de l'enregistrement du code de référence.

6. Procédé d'identification (100) selon l'une des revendications 1 à 4, **caractérisé en ce que** chaque comparaison positive d'un élément distinctif du code de référence avec le code actuel incrémente un score d'une première valeur, et **en ce que** chaque comparaison négative d'un élément distinctif du code de référence avec le code actuel décrémente le score d'une deuxième valeur.

7. Procédé d'identification (100) selon la revendication 5, **caractérisé en ce que** la première valeur est égale ou supérieure à la deuxième valeur.

8. Dispositif d'identification (150) d'une personne par son iris (252), le dispositif d'identification (150) comprenant:
- des moyens de capture (202) d'une image de l'oeil (250) à identifier,
- des moyens de détermination (204) d'une limite intérieure (304) de l'iris (252) à partir de ladite image,
- des moyens de mise en place (206) d'une limite extérieure prédéfinie (306) sur ladite image,
- des moyens d'analyse (208), qui, pour la limite extérieure (306), sont prévus pour analyser la zone (308) de l'image comprise entre la limite intérieure (304) et ladite limite extérieure (306),
- des moyens de génération (210) d'un code actuel associé à ladite analyse,
- des moyens de comparaison (212) du code actuel avec un code de référence généré précédemment et stocké dans une base de données (218),
- des moyens de mesure (214) de la ressemblance entre le code actuel et le code de référence à partir de la comparaison,
- des moyens de prise de décision (216) concernant l'identité de la personne à partir du résultat de la mesure, et
- des moyens de bouclage qui sont prévus pour choisir une autre limite extérieure prédéfinie (306), tant qu'il existe des limites extérieures prédéfinies (306) différentes ou tant que les moyens de prise de décision (116) n'ont pas délivrés une décision positive.

## Claims

1. Method (100) of identifying a person by his iris (252), the identification method (100) comprising the steps of:
- capturing (102) an image of an eye (250) to be identified,
- determining (104) the interior limit (304) of the iris (252) from the said image,
- placing (106) a predefined exterior limit (306) on said image,
- analysing (108), for said exterior limit (306), the area (308) of the image lying between the interior limit (304) and the said exterior limit (306),
- generating (110) a current code associated with the said analysis,
- comparing (112) the current code with a previously generated reference code,
- measuring (114) the resemblance between the current code and the reference code from the comparison,
- taking a decision (116) concerning the identity of the person from the result of the measurement, and
- looping back to the placing step (106), with another predefined exterior limit (306), as long as there exist different predefined exterior limits (306) or as long as the decision taking step (116) is not positive.

2. Identification method (100) according to claim 1, **characterised in that** the exterior limit (306) is predefined from elements exterior to the captured image.

3. Identification method (100) according to one of claims 1 or 2, **characterised in that** each exterior limit (306) is a closed curve.

4. Identification method (100) according to claim 3, **characterised in that**, when there are several closed curves (306), they define surfaces included in one another.

5. Identification method (100) according to one of the preceding claims, **characterised in that** each exterior limit is predefined at the time of recording of the reference code.

6. Identification method (100) according to one of claims 1 to 4, **characterised in that** each positive comparison of a distinctive element of the reference code with the current code increments a score by a first value, and **in that** each negative comparison of a distinctive element of the reference code with the current code decrements the score by a second value.

7. Identification method (100) according to claim 6, **characterised in that** the first value is equal to or greater than the second value.

8. Device (150) for identifying a person by his iris (252), the identification device (150) comprising:
- means (202) of capturing an image of an eye (250) to be identified,
- means (204) of determining an interior limit (304) of the iris (252) from the said image,
- means (206) of placing a predefined exterior limit (306) on said image,
- analysis means (208) which, for the exterior limit (306), are designed to analyse the area (308) of the image lying between the interior limit (304) and the said exterior limit (306),
- means (210) of generating a current code associated with the said analysis,
- means (212) of comparing the current code with a previously generated reference code stored in a database (218),
- means (214) of measuring the resemblance between the current code and the reference code from the comparison,
- means of taking a decision (216) concerning the identity of the person from the result of the measurement, and
- means of looping back that are designed to chose another predefined exterior limit (306), as long as there exist different predefined exterior limits (306) or as long as the decision-taking means (116) have not delivered a positive decision.

## Patentansprüche

1. Verfahren zum Identifizieren (100) einer Person durch ihre Iris (252), welches Identifizierungsverfahren (100) die Schritte enthält:
- Erfassen (102) eines Bilds eines zu identifizierenden Auges (250),
- Bestimmen (104) der inneren Begrenzung (304) der Iris (252) anhand des Bilds,
- Festlegen (106) einer vordefinierten äußeren Begrenzung (306) auf dem Bild,
- Analyse (108) des Bildbereichs (308) zwischen der inneren Begrenzung (304) und der äußeren Begrenzung (306) für die äußere Begrenzung (306),
- Generieren (110) eines aktuellen, mit der Analyse verknüpften Codes,
- Vergleichen (112) des aktuellen Codes mit einem vorher generierten Referenzcode,
- Messen (114) der Ähnlichkeit zwischen dem aktuellen Code und dem Referenzcode anhand des Vergleichs,
- Entscheidungsfindung (116) in Bezug auf die Identität der Person anhand des Messergebnisses, und
- Rückkehr zum Schritt des Festlegens (106) mit einer anderen vordefinierten äußeren Begrenzung (306), solange verschiedene vordefinierte äußere Begrenzungen (306) vorhanden sind oder solange der Schritt der Entscheidungsfindung (116) nicht positiv ausfällt.

2. Identifizierungsverfahren (100) nach Anspruch 1, **dadurch gekennzeichnet, dass** die äußere Begrenzung (306) anhand von äußeren Elementen im erfassten Bild vordefiniert wird.

3. Identifizierungsverfahren (100) nach einem der Ansprüche 1 oder 2, **dadurch gekennzeichnet, dass** jede äußere Begrenzung (306) eine geschlossene Kurve ist.

4. Identifizierungsverfahren (100) nach Anspruch 3, **dadurch gekennzeichnet, dass**, wenn es mehrere geschlossene Kurven (306) gibt, sie ineinander eingeschlossene Flächen definieren.

5. Identifizierungsverfahren (100) nach einem der vorhergehenden Ansprüche, **dadurch gekennzeichnet, dass** jede äußere Begrenzung im Augenblick des Aufzeichnens des Referenzcodes vordefiniert wird.

6. ldentifizierungsverfahren (100) nach einem der Ansprüche 1 bis 4, **dadurch gekennzeichnet, dass** jeder positive Vergleich eines unterscheidenden Elements des Referenzcodes mit dem aktuellen Code das Endergebnis eines ersten Werts erhöht, und dadurch, dass jeder negative Vergleich eines unterscheidenden Elements des Referenzcodes mit dem aktuellen Code das Endergebnis eines zweiten Werts verringert.

7. Identifizierungsverfahren (100) nach Anspruch 6, **dadurch gekennzeichnet, dass** der erste Wert gleich dem oder größer als der zweite Wert ist.

8. Vorrichtung zum Identifizieren (150) einer Person durch ihre Iris (252), welche ldentifizierungsvorrichtung (150) enthält:
- Mittel zum Erfassen (202) eines Bilds des zu identifizierenden Auges (250),
- Mittel zum Bestimmen (204) einer inneren Begrenzung (304) der Iris (252) anhand des Bilds,
- Mittel zum Festlegen (206) einer vordefinierten äußeren Begrenzung (306) auf dem Bild,
- Analysemittel (208), die für die äußere Begrenzung (306) dazu vorgesehen sind, den Bildbereich (308) zwischen der inneren Begrenzung (304) und der äußeren Begrenzung (306) zu analysieren,
- Mittel zum Generieren (210) eines aktuellen, mit der Analyse verknüpften Codes,
- Mittel zum Vergleichen (212) des aktuellen Codes mit einem vorher generierten und in einer Datenbank (218) gespeicherten Referenzcode,
- Mittel zum Messen (214) der Ähnlichkeit zwischen dem aktuellen Code und dem Referenzcode anhand des Vergleichs,
- Mittel zur Entscheidungsfindung (216) in Bezug auf die Identität der Person anhand des Messergebnisses, und
- Mittel zur Rückkehr, die dazu vorgesehen sind, eine andere vordefinierte äußere Begrenzung (306) auszuwählen, solange verschiedene vordefinierte äußere Begrenzungen (306) vorhanden sind oder solange die Mittel zur Entscheidungsfindung (216) keine positive Entscheidung bereitgestellt haben.
